# FASCICULE DE BREVET EUROPEEN

(11) **EP 2 087 720 B1**
(45) Date de publication et mention de la délivrance du brevet: **26.06.2013**
(21) Numéro de dépôt: 07870266.9
(22) Date de dépôt: 09.11.2007
(51) Int. Cl.: H04M 15/00

(54) **PROCÉDÉ ET SYSTÈME POUR GÉNÉRER DES OPÉRATIONS DE COMMUNICATION PLANIFIÉES SUR DES RÉSEAUX ET SYSTÈMES D'INFORMATION, ET MISE EN OEUVRE DE CE PROCÉDÉ DANS UN PROCESSUS DE VÉRIFICATION DE FACTURATION**
VERFAHREN UND SYSTEM ZUR HERSTELLUNG VON IN INFORMATIONSNETZWERKEN UND -SYSTEMEN GEPLANTEN KOMMUNIKATIONSVORGÄNGEN UND IMPLEMENTIERUNG DIESES VERFAHRENS IN EINEN ABRECHNUNGSÜBERPRÜFUNGSPROZESS
METHOD AND SYSTEM FOR GENERATING COMMUNICATION OPERATIONS PLANNED ON INFORMATION NETWORKS AND SYSTEMS, AND IMPLEMENTATION OF SAID METHOD IN A BILLING VERIFICATION PROCESS

(30) Priorité: 09.11.2006 FR 0609792
(43) Date de publication de la demande: 12.08.2009
(73) Titulaire: Araxxe, 92200 Neuilly sur Seine (FR)
(72) Inventeur: BENCHEQROUN, Mehdi, 75008 Paris (FR); LESAGE, Xavier, 92200 Neuilly Sur Seine (FR); SCHOLER, Christophe, 69003 Lyon (FR)
(74) Mandataire: Pontet, Bernard
(86) Numéro de dépôt international: PCT/FR2007/001854
(87) Numéro de publication internationale: WO 2008/071857

(56) Documents cités:
- EP-A- 1 094 678
- WO-A-99/01974
- WO-A-03/096661
- WO-A-2004/070555
- DE-A1- 10 011 986
- US-A1- 2006 046 710
- US-B1- 6 430 410
- US-B1- 6 587 543

## Description

La présente invention concerne un procédé pour générer des opérations de communication planifiées sur des réseaux et systèmes d'information. Elle vise également un système pour la mise en oeuvre de ce procédé, et l'application de ce procédé dans un processus de vérification de facturations d'opérations téléphoniques.

Dans le contexte actuel des réseaux de communication mondialisés fixes et mobiles interconnectés sur la surface du globe, les opérateurs de télécommunication sont confrontés à la nécessité de vérifier leur processus de mesure de consommation et de facturation. De plus, des tierces parties peuvent utiliser des failles dans leurs réseaux afin de générer du trafic frauduleux ou d'exploiter des distorsions tarifaires en créant artificiellement des dérivations de trafic (appelées "by pass" en anglais). Pour cela, les opérateurs sont conduits à réaliser des opérations de communication planifiées sur leurs réseaux et à générer du trafic de test afin de détecter des non conformités ou des risques de manque à gagner.

Jusqu'à présent, la planification et la mise en oeuvre de campagnes de vérification se sont avérées complexes et particulièrement coûteuses et les résultats obtenus ont été peu fiables.

Le document DE 100 11 986 divulgue une extension d'une carte SIM permettant une séparation spatiale entre cette carte SIM et la partie mobile, dans un but de test et de mesure sur des réseaux de communication mobile.

Le document WO 2004/070 555 divulgue un système et un procédé pour déterminer des anomalies dans un système de communication. Ce procédé inclut une comparaison de données d'usage à des données de facturation. Ces données de facturation sont collectées directement dans le système de communication, ce qui implique une intrusion dans ce système.

Le document WO 99/01974 A décrit un procédé de génération d'appels dans lequel un ordre d'exécution d'appels est émis, des ressources sont allouées pour exécuter ces appels et, après exécution des appels, des données de facturation théoriques sont comparées aux données de facturation réelles.

Le but de la présente invention est de remédier à ces inconvénients ou limitations en proposant un procédé pour générer des opérations de communication planifiées, qui soit plus simple et moins coûteux à mettre en oeuvre que les procédés existants.

Cet objectif est atteint avec un procédé pour générer des opérations de communication planifiées sur un ou plusieurs réseaux de communication à partir d'un système d'information et vérifier leur bonne facturation, selon la revendication 1.

Dans un mode préféré de réalisation du procédé selon l'invention, lorsqu'un robot exécute un appel, il accède aux données d'identité SIM associées à cet appel via une transaction spéciale avec un serveur de cartes SIM au travers d'un réseau de données, et ce serveur SIM fournit les données d'identité permettant d'accéder au réseau mobile.

Ainsi, avec le procédé de génération selon l'invention, il devient possible de proposer à des opérateurs de communication une procédure de vérification d'appels bien plus simple et bien moins coûteuse que les techniques existantes dans ce domaine. En effet, en faisant appel à un serveur de cartes SIM pour l'ensemble du système d'information, la gestion de ces cartes SIM s'avère beaucoup plus rationnelle et simple.

Il est important de souligner que le procédé de génération selon l'invention permet aisément un partage des infrastructures matérielles et logicielles entre plusieurs opérateurs souhaitant lancer des campagnes d'appel, notamment avec des objectifs de vérification des facturations. Ce partage contribue à une réduction significative des coûts d'exploitation des campagnes de vérification.

Dans ce contexte de mode partagé entre plusieurs opérateurs, chacun de ces opérateurs se voit allouer un terminal de connexion à partir duquel cet opérateur va pouvoir, d'une part, émettre des ordres d'exécution d'appels ciblés ou de campagnes d'appel, et d'autre part, accéder à rapports de test ou de vérification de facturation.

Le procédé selon l'invention peut en outre comprendre des règles de traitement automatique des demandes d'émission d'appels en provenance des opérateurs, de gestion des priorités d'appels en cas de conflit de ressource au sein d'un robot d'appel et de replanification des appels en cas d'échec sur un ou plusieurs des appels planifiés.

On peut avantageusement prévoir une phase préalable de définition d'une campagne d'appels de tests, mettant en oeuvre une modélisation des réseaux et systèmes de l'opérateur de télécommunications de façon à maximiser les probabilités de détection d'erreur.

On peut en outre inclure une phase de revalorisation et de corrélation des appels, permettant de vérifier un par un la bonne facturation des transactions générées sur un réseau de télécommunications.

Dans la suite de ce document, une campagne d'appels correspond à un ensemble de transactions, avec des dates déterminées de début et de fin, et une description des communications à réaliser.

L'utilisation d'un serveur SIM procure plusieurs avantages, tels qu'une réduction des coûts opérationnels, et qu'une amélioration de la sécurité. En effet, les cartes SIM sont stockées dans un site central sécurisé, au lieu d'être disséminés partout dans le monde.

Dans un mode de réalisation préféré, les opérations de communication planifiées sont réalisées par une pluralité de robots d'appel installés dans une pluralité de sites connectés via le réseau de communication au site de planification des appels.

Lorsqu'un robot exécute un appel, il accède aux données d'identité SIM associées à cet appel via une transaction spéciale avec le serveur SIM sur un réseau de données, et en ce que ledit serveur SIM fournit les données d'identité permettant d'accéder au réseau mobile.

Le procédé de génération selon l'invention peut en outre avantageusement comprendre un premier mode d'exploitation dans lequel une demande d'exécution d'un appel déterminé est transmise au site de planification d'appels qui insère cette demande de transaction dans un plan d'appels.

Ce procédé peut aussi comprendre un second mode d'exploitation dans lequel une liste d'appels déterminés à exécuter est transmise au site de planification d'appels qui traite cette liste pour allouer les ressources nécessaires au sein du système d'information, ainsi qu'un troisième mode d'exploitation dans lequel, en réponse à une demande d'exécution d'appels présentant une caractéristique commune prédéterminée, le site de planification d'appels définit une campagne d'appels.

Le procédé de génération selon l'invention peut aussi comprendre une étape de programmation d'appel agencée pour vérifier les droits d'exécution d'appels. Cette étape de programmation est en outre agencée pour détecter une situation de conflit de ressource dans laquelle un appel correspondant aux données d'identité SIM d'un appel planifié dans une campagne d'appel entre en collision avec ledit appel planifié. Elle peut aussi être prévue pour générer des priorités d'appels, et pour reprogrammer des appels qui n'ont pu être exécutés.

Suivant un autre aspect de l'invention, il est proposé un système selon la revendication 7.

Le système selon l'invention peut comprendre en outre un système de revalorisation et de corrélation des appels permettant de vérifier un par un la bonne facturation des transactions générées sur un réseau de télécommunications.

Le système pour générer des opérations de communication planifiées sur des réseaux et systèmes d'information, mettant en oeuvre le procédé selon l'invention, comprend donc de préférence :
- des moyens pour allouer des ressources pour une campagne d'appels sur une durée prédéterminée,
- un serveur de cartes SIM,
- des moyens pour gérer en temps partagé des équipements de communication,
- des moyens pour générer des transactions de communication, en réponse à des demandes provenant d'un site de planification, et
- des moyens pour rapporter des informations sur les transactions exécutées.

Les moyens de génération de transaction de communication peuvent avantageusement comprendre au moins un robot d'appel connecté à un système de commande de robot via au moins un réseau de communication.

Les moyens d'allocation de ressources et les moyens de gestion d'équipements de communication sont de préférence agencés au sein d'un serveur de planification de transactions.

Le serveur de planification de transactions peut en outre comprendre un module de gestion de commande distance agencé pour recevoir des ordres d'appel ciblés.

Suivant encore un autre aspect de l'invention, il est proposé une application du procédé selon l'invention, dans un processus de vérification de facturation d'opérations de communication au sein d'un système d'information, comprenant les étapes suivantes :
- une modélisation d'un schéma de facturation et d'un trafic de communication au sein dudit système d'information,
- une conception d'un échantillon optimal de transactions au sein dudit système d'information,
- une allocation de ressources pour une campagne d'appels pendant une durée prédéterminée ;
- un groupement de communications dans une campagne d'appels, et
- un traitement de données générées pendant ladite campagne, de façon à délivrer des informations de vérification basées sur la collecte d'information au sein de l'infrastructure de l'opérateur.

D'autres avantages et caractéristiques de l'invention apparaîtront à l'examen de la description détaillée d'un mode de mise en oeuvre nullement limitatif, et des dessins annexés sur lesquels :
- la figure 1 illustre l'architecture d'un système de vérification de facturation implémentant un système de génération d'appels selon l'invention ; et
- La figure 2 illustre le traitement d'un numéro de carte SIM dans le procédé de génération d'appels selon l'invention.

On va maintenant décrire, en référence aux figures précitées, un exemple de réalisation du procédé de génération selon l'invention, en même temps que le système pour sa mise en oeuvre.

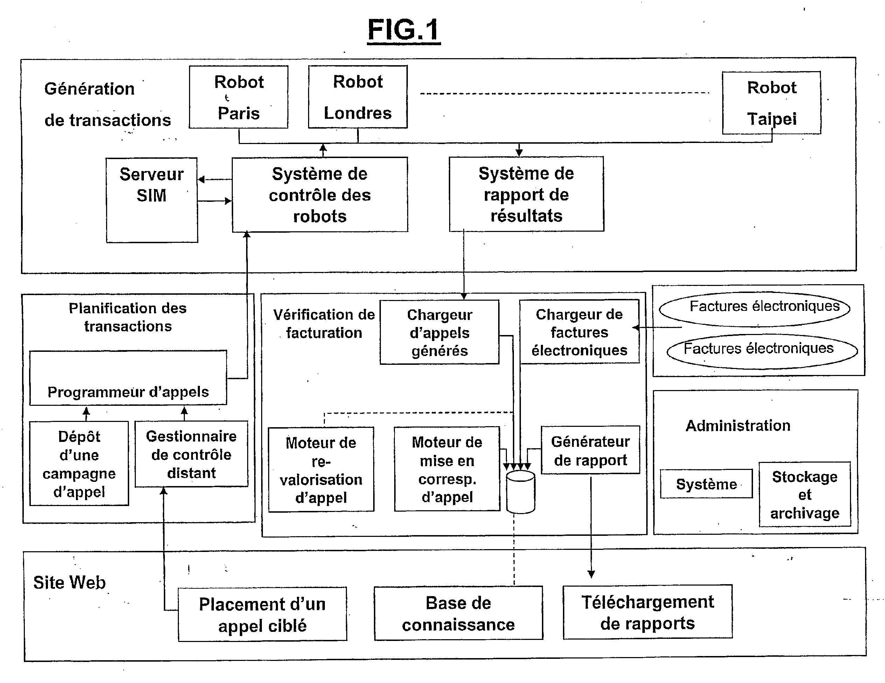

Dans un mode pratique de réalisation, un système de génération d'appels selon l'invention est inclus dans un système de vérification de facturation, comme l'illustre la figure 1. Il comprend une partie de planification de transaction et une partie d'équipements dédiés à la génération des transactions planifiées. Le module de planification de transaction

La partie de planification comprend un module de gestion de commande distante, un module de réception de campagne d'appels, ces deux modules fournissant des données à un module de programmation d'appels.

La partie de génération de transactions comprend un serveur de cartes SIM, un ensemble de robots d'appels situés dans des lieux répartis dans le monde entier, un système de commande de ces robots et un système de collecte de résultats en provenance des robots d'appel.

Le système de commande des robots est commandé par le module de programmation d'appels, et émet des requêtes d'information au serveur SIM.

Le système de vérification de facturation comprend, outre le système de génération d'appels selon l'invention, une partie de vérification, un serveur de site web dédié à cette application et une partie d'administration.

La partie de vérification comprend un module chargeur des appels générés recevant des données issues du système de collecte de résultats, un module chargeur de factures électroniques collectées sur des sites d'opérateurs mobiles, un moteur de mise en correspondance d'appel, un moteur de re-calcul de facturation, et un générateur de rapport de campagne de vérification.

Un site Web du système de vérification de facturation permet aux utilisateurs les opérations suivantes :
- entrer des demandes d'appel ciblé,
- accéder à une base de connaissances du système de vérification,
- télécharger des rapports de vérification.

Les robots qui génèrent l'ensemble des transactions sont des équipements spéciaux qui gèrent un ensemble de différents équipements de communication. Un robot comprend une carte-mère, un module d'émulation de carte SIM, une antenne, des ports physiques pour connecter des lignes fixes et des connections à large bande, et des équipements de communications (téléphones, modems).

La fonction de base de ces robots est d'exécuter les transactions reçues du site de planification des appels et de rapporter avec précision les détails des transactions exécutées.

Les équipements de communication concernés peuvent être des téléphones mobiles, des modems ISDN (acronyme de « Integrated Service Digital Network : Réseau Numérique) ou PSTN (acronyme de « Public Switched Telephone Network » : Réseau Téléphonique Commuté Public) ou des cartes de réseau. Les robots sont équipés de différents équipements de communication en fonction des besoins. Pendant la durée de vie d'un robot, des équipements de communication peuvent être retirés ou ajoutés.

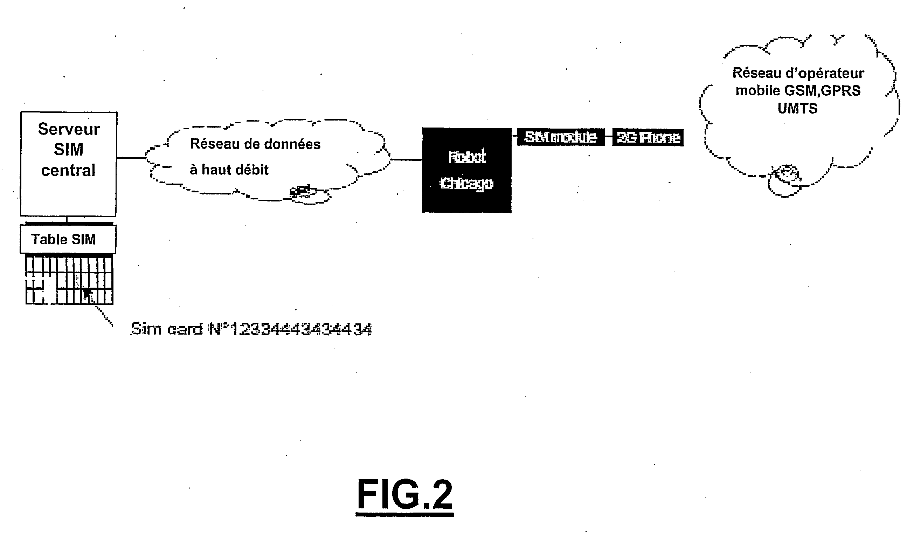

Les cartes SIM des utilisateurs du procédé selon l'invention sont stockées dans un serveur SIM central, en référence à la figure 2.

Lorsqu'un téléphone mobile exécute un appel dans le cadre d'une campagne d'appels, le robot dont il dépend accède au serveur SIM via une transaction spéciale sur un réseau de communication à haute vitesse pour obtenir les données de la carte SIM correspondant à ce téléphone mobile via une transaction spéciale sur un réseau de données à grande vitesse. Le serveur SIM fournit les données d'identité pour que le téléphone puisse accéder au réseau mobile. Ceci ne change rien à la nature de l'appel même si des milliers de kilomètres séparent ce téléphone et les cartes SIM. L'utilisation du serveur SIM procure plusieurs avantages, notamment une amélioration de la sécurité puisque les cartes SIM sont stockées dans un site central sécurisé au lieu d'être disséminées partout dans le monde, et une réduction des coûts opérationnels.

On va maintenant décrire un exemple particulier de mise en oeuvre du procédé de génération d'appels selon l'invention, dans le cadre d'un processus de vérification de facturation. Le procédé de génération d'appels est par exemple implémenté dans un centre d'opération équipé d'un serveur et de multiplexeurs SIM, d'un module de commande distante de robots, d'unités de stockage local de données, de serveurs de planification d'appels et de correspondance, et d'un serveur Web. Ce centre d'opération est en outre connecté à un centre de sauvegarde distant.

Les appels, qui font l'objet d'une campagne d'appels de vérification, peuvent être effectués selon trois modes :
- un mode d'appel ciblé, dans lequel l'utilisateur du procédé selon l'invention spécifie directement un appel à exécuter sur un site Web sécurisé. La requête d'appel est traitée automatiquement par le moteur de planification et insérée dans le plan d'appels ;
- un mode de campagne d'appel explicite, dans lequel l'utilisateur du procédé fournit une liste d'appels à exécuter. Cette liste d'appels est alors traitée pour être intégrée dans une campagne d'appels ;
- un mode de campagne d'appel implicite, dans lequel l'utilisateur du procédé sollicite une campagne d'appels dédiée à un objectif particulier, par exemple une vérification d'appels dont la durée déborde des cycles de facturation.

Pour exploiter ces différents modes, un moteur flexible de planification d'appel a été conçu pour :
- vérifier les droits d'exécution d'appels,
- détecter des conflits de ressource,
- gérer des priorités,
- reprogrammer des appels qui n'ont pas pu être exécutés.

Un module spécifique est dédié au téléchargement de données de facturation en provenance des clients. Les sources préférées de données de facturation sont :
- « non intrusives », à savoir que les données sont déjà disponibles pour les clients finaux, par exemple sous la forme de factures électroniques accessibles sur un site Web ;
- « en flux aval », à savoir que les données sont accessibles très en aval dans la chaîne de cycle de vie des enregistrements CDR (acronyme de « Call Data Record » : Enregistrement de Données d'Appel), depuis la production des enregistrements jusqu'au calcul et à la présentation de la facture.

Les données filtrées sont de préférence collectées au niveau de la présentation de la facture. Le module de correspondance effectue une corrélation entre les transactions exécutées et les lignes de facturation.

La mise en correspondance est effectuée en utilisant des procédés de « logique floue » pour prendre en compte avec de petites erreurs sur l'horodatage et la durée d'appel. Les données résultantes de correspondance incluent un code de correspondance :
- "P": correspondance parfaite entre la communication exécutée et la ligne de facturation ;
- "D": correspondance, avec une anomalie sur la durée ;
- "T": correspondance, avec une anomalie sur l'heure d'appel ;
- "B": correspondance, avec deux anomalies sur la durée et l'heure d'appel ;
- "L": correspondance, avec trop ou trop peu de lignes de facturation ;
- "N": aucune ligne de facturation n'a été trouvée pour cette communication ;

Le module de comparaison indique non seulement si un appel fait l'objet d'une correspondance de facturation, mais aussi la raison pour laquelle un appel n'a pas fait l'objet d'une correspondance.

Un code de retour indique qu'un événement « candidat » a été trouvé mais qu'il est déjà en correspondance avec un autre événement.

En fonction des règles de valorisation et de facturation d'un opérateur, ceci pourrait indiquer une duplication ou une ancienne correspondance partielle. Dans ce cas, le module de comparaison met en oeuvre une fonction de dé corrélation qui « libère » l'événement mal corrélé et permet ensuite une meilleure mise en correspondance avec le CDR plus récent.

Cette fonction de dé corrélation peut être utilisée à d'autres fins, notamment selon des critères fournis par l'exploitant du procédé selon l'invention.

Plusieurs opérateurs de télécommunication ont implémenté des règles de facturation qui impliquent plusieurs lignes de facture :
- une transaction unique avec deux enregistrements, par exemple un très long appel peut conduire à deux lignes sur une facture ;
- des transactions liées avec deux lignes différentes ; par exemple, une demande SMS surtaxée peut conduire à deux lignes, l'une pour les charges de transport, l'autre pour une fourniture de contenu.

Ces mécanismes sont particulièrement difficiles à prendre en compte par la plupart des systèmes d'assurance de revenu. Le module de correspondance du procédé selon l'invention peut être aisément configuré pour suivre ces mécanismes et s'assurer que les transactions sont correctement facturées.

Le module de re-valorisation est prévu pour recalculer les données de facturation afin de s'assurer que les transactions calculées par le système de facturation de l'opérateur correspondent bien au bon prix.

Le module de re-calcul supporte les principales caractéristiques de calcul implémentées par la plupart des opérateurs de télécommunication en matière de détermination des prix, notamment des chaînes de substitution multi-forfaits, un zonage, des plans tarifaires préférentiels, des appels « à cheval », des forfaits partagés.

On doit cependant envisager le cas où un schéma de facturation très spécifique développé par un opérateur n'est pas encore implémenté dans le module de re-calcul. Dans ce cas, le module de re-calcul peut être mis à jour.

Le mécanisme de re-valorisation est un processus en trois étapes :
- acquisition de données facturées (ligne de facturation, débit, enregistrement calculé) et reconstruction d'un enregistrement brut,
- enregistrement de transaction (dans le cas de lignes multiples),
- re-valorisation d'enregistrements de transaction brute en fonction du catalogue de prix public fourni par l'opérateur ;
- comparaison du prix calculé par ce mécanisme et du prix valorisé par le système de facturation de l'opérateur, et
- rapport de toute anomalie.

Une autre façon d'utiliser l'invention à des fins de contrôle du revenu consiste à utiliser les appels de tests afin de déterminer si le numéro de l'équipement appelant reçu sur le robot appelé est effectivement correct. Dans le cas ou ce numéro n'est pas correct ou est différent du numéro attendu, il est vraisemblable qu'un tiers ait tenté d'exploiter une distorsion tarifaire ou un défaut technique du réseau de l'opérateur pour mettre en place une dérivation licite ou illicite du trafic. Il est alors possible d'établir avec certitude l'origine de la fraude.

## Revendications

1. Procédé pour générer des opérations de communication planifiées sur un ou plusieurs réseaux de communication à partir d'un système d'information et vérifier leur bonne facturation, dans un but de détection d'opérations de dérivation de trafic par des tierces parties, ledit procédé comprenant les étapes suivantes :
- réception d'au moins un ordre d'exécution d'appels,
- allocation de ressources au sein dudit système d'information pour une exécution desdits appels, selon une campagne d'appels ou un plan d'appels,
- exécution desdits appels par une pluralité de robots,
- collecte des données de facturation produite par l'opérateur, et
- corrélation automatique de données permettant une identification d'anomalie,
**caractérisé en ce que** ladite corrélation comprend une comparaison d'identifiants d'appelant attendus théoriquement à des identifiants réellement constatés.

2. Procédé selon la revendication 1, **caractérisé en ce que** les appels sont exécutés à distance d'un serveur de cartes SIM, par une pluralité de robots connectés audit serveur de cartes SIM au travers d'un réseau de communication.

3. Procédé selon la revendication 2, **caractérisé en ce que** lorsqu'un robot exécute un appel, il accède aux données d'identité SIM associées à cet appel via une transaction spéciale avec un serveur de cartes SIM au travers d'un réseau de données, et **en ce que** ledit serveur SIM fournit les données d'identité permettant d'accéder au réseau mobile.

4. Procédé selon l'une des revendications 1 ou 2, caractérisé en qu'il comprend en outre des règles de traitement automatique des demandes d'émission d'appels en provenance des opérateurs, de gestion des priorités d'appels en cas de conflit de ressource au sein d'un robot d'appel et de replanification des appels en cas d'échec sur un ou plusieurs des appels planifiés.

5. Procédé selon l'une quelconque des revendications précédentes, **caractérisé en ce qu'**il comprend en outre une phase préalable de définition d'une campagne d'appels de tests, mettant en oeuvre une modélisation des réseaux et systèmes de l'opérateur de télécommunications de façon à maximiser les probabilités de détection d'erreur.

6. Procédé selon l'une quelconque des revendications précédentes, caractérisé en qu'il comprend en outre une phase de revalorisation et de corrélation des appels, permettant de vérifier un par un la bonne facturation des transactions générées sur un réseau de télécommunications.

7. Système pour générer des opérations de communication planifiées sur un ou plusieurs réseaux de communication à partir d'un système d'information et vérifier leur bonne facturation, dans un but de détection d'opérations de dérivation de trafic par des tierces parties, ledit système comprenant :
- des moyens de réception d'au moins un ordre d'exécution d'appels,
- des moyens d'allocation de ressources au sein dudit système d'information pour une exécution desdits appels selon une campagne d'appels ou un plan d'appel sur une durée prédéterminée,
- des moyens d'exécution desdits appels, lesdits moyens comprenant :
o au moins un robot générant au moins un appel, ledit robot gérant des équipements de communications en temps partagé,
o au moins un robot de réception dudit au moins un appel ;,
- des moyens de collecte des données de facturation produite par l'opérateur, et
- des moyens de corrélation automatique de données permettant une identification d'anomalie,
**caractérisé en ce que** lesdits moyens de corrélation comprennent des moyens de comparaison d'identifiants d'appelant attendus théoriquement à des identifiants réellement constatés par le robot recevant l'appel.

8. Système selon la revendication 7, caractérisé en qu'il comprend en outre un système de revalorisation et de corrélation des appels permettant de vérifier un par un la bonne facturation des transactions générées sur un réseau de télécommunications.

## Patentansprüche

1. Verfahren zum Generieren geplanter Verbindungsvorgänge in einem oder mehreren Kommunikationsnetzen anhand eines Informationssystems und zum Überprüfen ihrer richtigen Abrechnung, mit dem Ziel einer Erfassung von Verkehrsumleitungsvorgängen durch Dritte, wobei das Verfahren die folgenden Schritte umfasst:
- Empfangen wenigstens eines Befehls zum Ausführen von Anrufen,
- Zuweisung von Ressourcen innerhalb des Informationssystems für ein Ausführen der Anrufe, entsprechend einer Anrufaktion oder eines Anrufplans,
- Ausführen der Anrufe durch eine Vielzahl von Robotern,
- Sammeln der Daten der durch den Betreiber erstellten Abrechnung und
- automatische Datenkorrelation, die ein Identifizieren einer Anomalie ermöglicht,
**dadurch gekennzeichnet, dass** die Korrelation einen Vergleich von theoretisch erwarteten Anruferkennungen mit tatsächlich festgestellten Kennungen umfasst.

2. Verfahren nach Anspruch 1, **dadurch gekennzeichnet, dass** die Anrufe von einem SIM-Karten-Server entfernt, mittels einer Vielzahl von Robotern, die mit dem SIM-Karten-Server über ein Kommunikationsnetz verbunden sind, ausgeführt werden.

3. Verfahren nach Anspruch 2, **dadurch gekennzeichnet, dass** wenn ein Roboter einen Anruf ausführt, er auf die diesem Anruf zugeordneten SIM-Identitätsdaten über eine Sondertransaktion mit einem SIM-Karten-Server mittels eines Datennetzes zugreift und dass der SIM-Server die Identitätsdaten liefert, die den Zugriff auf das Mobilfunknetz ermöglichen.

4. Verfahren nach einem der Ansprüche 1 oder 2, **dadurch gekennzeichnet, dass** es ferner Regeln zur automatischen Bearbeitung der Anrufsendeanfragen von den Betreibern, zur Verwaltung der Anrufprioritäten im Fall eines Ressourcenkonflikts innerhalb eines Anrufroboters und zur erneuten Planung der Anrufe bei einem oder mehreren erfolglosen geplanten Anrufen umfasst.

5. Verfahren nach einem der vorhergehenden Ansprüche, **dadurch gekennzeichnet, dass** es ferner eine vorherige Phase zur Definition einer Aktion von Testanrufen umfasst, die ein Modellieren der Netze und Systeme des Telekommunikationsbetreibers anwendet, um die Fehlererkennungswahrscheinlichkeiten zu maximieren.

6. Verfahren nach einem der vorhergehenden Ansprüche, **dadurch gekennzeichnet, dass** es ferner eine Phase zur Neubewertung und zur Korrelation der Anrufe umfasst, die ermöglicht, die richtige Abrechnung der generierten Transaktionen in einem Telekommunikationsnetz einzeln zu überprüfen.

7. System zum Generieren geplanter Verbindungsvorgänge in einem oder mehreren Kommunikationsnetzen anhand eines Informationssystems und zum Überprüfen ihrer richtigen Abrechnung, mit dem Ziel einer Erfassung von Verkehrsumleitungsvorgängen durch Dritte, wobei das System umfasst:
- Mittel zum Empfangen wenigstens eines Befehls zum Ausführen von Anrufen,
- Mittel zur Zuweisung von Ressourcen innerhalb des Informationssystems für ein Ausführen der Anrufe entsprechend einer Anrufaktion oder eines Anrufplans über eine vorbestimmte Dauer,
- Mittel zum Ausführen der Anrufe, wobei die Mittel umfassen:
● wenigstens einen Roboter, der wenigstens einen Anruf generiert, wobei der Roboter Kommunikationseinrichtungen in Teilzeit steuert,
● wenigstens einen Roboter zum Empfangen des wenigstens einen Anrufs,
- Mittel zum Sammeln der Daten der durch den Betreiber erstellten Abrechnung und
- Mittel zur automatischen Datenkorrelation, die ein Identifizieren einer Anomalie ermöglicht,
**dadurch gekennzeichnet, dass** die Korrelationsmittel Mittel zum Vergleichen von theoretisch erwarteten Anruferkennungen mit Kennungen, die tatsächlich durch den den Anruf empfangenden Roboter festgestellt werden, umfassen.

8. System nach Anspruch 7, **dadurch gekennzeichnet, dass** es ferner ein System zur Neubewertung und zur Korrelation der Anrufe umfasst, das ermöglicht, die richtige Abrechnung der generierten Transaktionen in einem Telekommunikationsnetz einzeln zu überprüfen.

## Claims

1. A method for generating scheduled communication operations over one or more communication networks from an information system and verifying their correct invoicing, for the purpose of detecting traffic by-pass operations by third parties, said method comprising the following steps:
- receiving at least one call execution order,
- allocating resources within said information system for executing said calls, according to a call campaign or a call schedule,
- executing said calls by a plurality of robots,
- collecting invoicing data produced by the operator, and
- automatic data correlation allowing anomaly identification,
**characterized in that** said correlation comprises a comparison of theoretically expected caller identifiers with identifiers actually recorded.

2. The method according to claim 1, **characterized in that** the calls are executed remotely from a SIM card server, by a plurality of robots connected to said SIM card server via a communication network.

3. The method according to claim 2, **characterized in that** when a robot executes a call, it accesses SIM identity data associated with this call via a special transaction with a SIM card server over a data network, and **in that** said SIM server provides the identity data allowing access to the mobile network.

4. The method according to one of claims 1 or 2, **characterized in that** it comprises moreover rules for automatic processing of the call emission applications originating from operators, call priority management in the event of conflict of resources within a call robot and rescheduling of calls in the case of failure on one or more of the scheduled calls.

5. The method according to any one of the preceding claims, **characterized in that** it comprises moreover a prior phase of defining a test call campaign, implementing modelling of the networks and systems of the telecommunications operator so as to maximize the probabilities of error detection.

6. The method according to any one of the preceding claims, **characterized in that** it comprises moreover a phase of revaluation and correlation of the calls, allowing the correct invoicing of the transactions generated over a telecommunications network to be verified one by one.

7. A system for generating scheduled communication operations over one or more communication networks from an information system and verifying their correct invoicing, for the purpose of detecting traffic by-pass operations by third parties, said system comprising:
- means for receiving at least one call execution order,
- means for allocating resources within said information system for executing said calls according to a call campaign or a call schedule, over a predetermined duration,
- means for executing said calls, said means comprising:
o at least one robot generating at least one call, said robot managing items of communications equipment in shared time,
o at least one robot for receiving said at least one call,
- means for collecting invoicing data produced by the operator, and
- means for automatic data correlation allowing anomaly identification,
**characterized in that** said correlation means comprise means for comparing theoretically expected caller identifiers with identifiers actually recorded by the robot receiving the call.

8. The system according to claim 7, **characterized in that** it comprises moreover a system for revaluation and correlation of the calls, allowing the correct invoicing of the transactions generated over a telecommunications network to be verified one by one.
